# EUROPÄISCHE PATENTANMELDUNG

(11) **EP 1 327 672 A1**
(43) Veröffentlichungstag der Anmeldung: **16.07.2003**
(21) Anmeldenummer: 02028208.3
(22) Anmeldetag: 14.12.2002
(51) Int. Cl.: C09J 7/04, C09J 7/02, C09J 133/08, B65H 19/10

(54) **Klebeband für den Rollenwechsel und Verwendung eines Klebebands**

(30) Priorität: 15.01.2002 DE 10201404
(71) Anmelder: tesa AG, 20253 Hamburg (DE)
(72) Erfinder: Gebbeken, Bernhard, Dr., 21075 Hamburg (DE); Nagel, Christoph, 22529 Hamburg (DE)

(57) **Zusammenfassung**

Für einen statischen, manuellen Rollenwechsel von auf Rollen aufgewickeltem Flachbahnmaterial wird ein Klebeband verwendet, das mit einem Hauptträger (2), einer Selbstklebemasse (3) auf der Vorderseite und zumindest einem klebenden spaltbaren System auf der Rückseite ausgestattet ist, wobei die Selbstklebemasse (3) eine Scherfestigkeit von mindestens 1000 Minuten auf Streichrohpapier und mindestens 2000 Minuten auf Tiefdruckpapier aufweist, gemessen jeweils bei 23°C und 55% relative Luftfeuchte und bei 1kg Belastung.

## Beschreibung

Die Erfindung betrifft ein Klebeband für den Rollenwechsel von auf Rollen aufgewickeltem Flachbahnmaterial, ausgerüstet mit einem Hauptträger, einer Selbstklebemasse auf der Vorderseite und zumindest einem klebenden spaltbaren System auf der Rückseite.

Die Erfindung betrifft ferner die Verwendung eines derartigen Klebebandes.

Zur endlosen Verarbeitung von auf Rollen aufgewickeltem Flachbahnmaterial, beispielsweise in Papierfabriken o. dgl., werden verschiedene Verfahren eingesetzt.

Für große Produktionsanlagen, die praktisch ohne Stillstandszeiten arbeiten, wird ein fliegender Rollenwechsel vorgenommen. Dabei wird der Papiervorrat auf einer in Betrieb befindlichen Rolle detektiert. Sobald der Papiervorrat zu Ende geht, wird eine neue Rolle angetrieben, sodass der Bahnanfang der neuen Rolle die gleiche Geschwindigkeit aufweist, wie das Bahnende der alten Rolle. Die Bahnenden werden durch Klebebänder miteinander verklebt, wobei Bahnende der alten Rolle und Bahnanfang der neuen Rolle beide auf der Vorderseite des Klebebandes angeklebt werden können. Dabei ist es bekannt, die Rückseite mit einem spaltbaren, doppelseitigen Klebeband zu versehen, um den Rollenanfang der neuen Rolle auf der darunter liegenden Windung festzulegen, um ein unbeabsichtigtes Abspulen der Bahn zu verhindern und nach der Herstellung der Klebverbindung eine Freigabe des Rollenanfangs unter definierten Ablösebedingungen zu gewährleisten.

Bei weniger aufwändigen Vorrichtungen, wie beispielsweise Umwicklern, Rollenschneidern und Querschneidern werden manuelle Rollenwechsel statisch durchgeführt. Dabei können beispielsweise zwei Papiertamboure miteinander verbunden werden, um z.B. Rollen einer gewünschten Länge schneiden zu können. In anderen Fällen wird ein Tambour umgewickelt und ein neuer Ansatz geklebt, um schadhafte Papierabschnitte auszusortieren. Beim statischen, manuellen Rollenwechsel wird der Papiertambour angehalten, das Ende des einen Tambours mit dem Anfang des anderen verklebt und dann wieder angefahren. Dabei werden doppelseitige Klebebänder, sogenannte Fixe, oder einseitige Klebebänder verwendet. Die hierfür verwendeten Klebebänder weisen neben einem Papierträger eine wasserlösliche Selbstklebemasse einseitig oder beidseitig auf. Diese Klebebänder werden in Handarbeit am Ende der einen Papierrolle mit dem Anfang der neuen Rolle verklebt.

Beim Einsatz der doppelseitigen Klebebänder wird das Klebeband mit der offen liegenden Klebemasse bündig auf die oberste Papierlage der einen Bahn verklebt, das Trennpapier abgezogen und dann die Papierlage des anderen Tambours auf die nun offene Klebemasse verklebt. Überstehende Papierreste werden abgeschnitten bzw. abgerissen.

Beim Einsatz von einseitigen Klebebändern wird das Klebeband hälftig unter die oberste Papierlage des einen Tambours verklebt und auf die nun noch freiliegende Klebemasse wird das andere Ende der zu verklebenden Rolle fixiert. Vorteilhafterweise haben diese Klebebänder ein mittig geschlitztes Trennpapier, sodass immer nur die Klebemasse frei liegt, auf der das Papier verklebt wird. Diese Splicetechnik wird besonders bei Splicen eingesetzt, die länger in der Papierrolle verbleiben. Durch ihr geringe Dicke ist die Gefahr von Druckstellen und Masseausquetschungen in der Papierrolle besonders gering.

Die für den statischen, manuellen Rollenwechsel eingesetzten Klebebänder müssen besonders scherfeste Klebmassen aufweisen, da beim Anfahren der Rollen beispielsweise aufgrund ungleichmäßiger Anfahrvorgänge und ggf. gewünschter großer Wickelspannungen erhebliche Zugspannungen auftreten können, durch die Klebebänder, die nicht mit hochscherfesten Klebemassen beschichtet sind, versagen können.

Für das manuelle Aufbringen der bekannten Klebebänder werden Fachkräfte benötigt. Darüber hinaus müssen meist mechanische Hilfen verwendet werden, die die Papierbahn von der Rolle abhalten, um ein ungewolltes Ankleben zu verhindern oder die ein gerades Schneiden und Verkleben gewährleisten. Regelmäßig müssen zwei Mitarbeiter eingesetzt werden, um eine fachgerechte Ausführung zu gewährleisten.

Der Erfindung liegt die Problemstellung zugrunde, den statischen, manuellen Rollenwechsel zu vereinfachen.

Zur Lösung dieser Aufgabe ist ein Klebeband der eingangs erwähnten Art erfindungsgemäß dadurch gekennzeichnet, dass zur Aufnahme hoher Anlaufkräfte bei einem statischen, manuellen Rollenwechsel die Selbstklebemasse eine Scherfestigkeit von mindestens 1000 Minuten auf Streichrohpapier und mindestens 2000 Minuten auf Tiefdruckpapier aufweist, gemessen jeweils bei 23 °C und 55 % relative Luftfeuchte und bei 1 kg Belastung.

Das oben erwähnte Problem wird ferner gelöst durch die Verwendung eines mit einem Hauptträger, einer Selbstklebemasse auf der Vorderseite und zumindest einem spaltbaren System auf der Rückseite ausgebildeten Klebebandes für die Durchführung eines statischen, manuellen Rollenwechsels von auf Rollen aufgewickelten Flachbahnmaterial, nachdem eine Selbstklebemasse aufgebracht ist, die eine Scherfestigkeit von mindestens 1000 Minuten auf Streichrohpapier und mindestens 2000 Minuten auf Tiefdruckpapier aufweist, gemessen jeweils bei 23 °C und 55 % relative Luftfeuchtigkeit und bei 1 kg Belastung.

Das erfindungsgemäße Klebeband ähnelt dem für den fliegenden Rollenwechsel vorgesehenen Klebeband, ist erfindungsgemäß jedoch mit einer Selbstklebemasse versehen, die die hohen Zugkräfte bei einem statischen, manuellen Rollenwechsel aufnehmen kann. Demgemäß wird ein derartiges Klebeband erfindungsgemäß für einen statischen manuellen Rollenwechsel verwendet.

Hierbei ist es zweckmäßig, wenn für das Ende der alten Rolle und den Anfang der neuen Rolle gleiche Flächen der Selbstklebemasse vorhanden sind, dass also das Klebeband in Transportrichtung bezüglich der alten und der neuen Rolle symmetrisch ausgebildet ist. Soweit die Selbstklebemasse mit einer Abdeckung versehen ist, die mit einer Perforation oder einem Schlitz quer zur Bewegungsrichtung (also in Längsrichtung des Klebebandes) versehen ist, befindet sich die Perforation oder der Schlitz zweckmäßigerweise in der Mitte. Symmetrisch zu dieser Mitte ist auch das wenigstens eine spaltbare klebende System angeordnet.

In einer sehr bevorzugten Ausführungsform der Erfindung wird als Selbstklebemasse eine Acrylathaftklebemasse eingesetzt. Es können vorteilhaft sowohl wasserlösliche als auch wasserunlösliche Acrylate eingesetzt werden.

Weiterhin lassen sich auch Natur- und Synthesekautschukmassen als auch Dispersionen der vorstehend beschriebenen Verbindungen einsetzen. Es sei darauf verwiesen, dass prinzipiell alle Basistypen von Haftklebemassen, welche die erfinderischen Kriterien erfüllen, eingesetzt werden können.

### Die Messung der Scherfestigkeit erfolgt dabei wie folgt:

Zur Messung der Scherfestigkeit von Klebmassen werden diese auf einen Standardträger (Polyesterfolie; Dicke: 25 µm) beschichtet. Vorteilhafterweise wird ein immer gleicher Masseauftrag von 25 g/m² gewählt.

Nach dem Trocknen und einer eventuellen Vernetzung der Klebmasse wird ein Streifen von 13 mm Breite und mindestens 20 mm Länge herausgeschnitten und auf ein definiertes Papier (z. B. Tiefdruckpapier, z. B. Neopress T 54, 54 g/m², oder Streichrohpapier, z. B. Mediaprint, 135 g/m²) verklebt. Die Verklebungsfläche beträgt 13 mm x 20 mm. Um einen konstanten Andruck beim Verkleben zu gewährleisten, wird der Prüfling mit einer Rolle (Gewicht: 2 kg) zweimal langsam überrollt. Das so hergestellte Prüfmuster wird mit einem Gewicht von 1 kg parallel zur Verklebungsebene belastet und die Zeit gemessen, die der Klebestreifen auf dem Papier verbleibt.
Für eine bessere Differenzierung der einzelnen Klebmassen wird der Test entsprechend bei weiteren Prüftemperaturen (z.B. 40 °C und 70 °C) durchgeführt.

Um eine fehlerfreie Funktion zu gewährleisten, muss die Klebmasse ein Gewicht von 1 kg mehr als 1000 Minuten auf Streichrohpapier und mehr als 2000 Minuten auf Tiefdruckpapier bei 23 °C und 55 % rel. Luftfeuchte halten.

Als Selbstklebemasse können beispielsweise Acrylatselbstklebemassen der folgenden Zusammensetzung eingesetzt werden:
40 bis 90 Gew.-% Acrylsäure, 60 bis 10 % Butylacrylat, oder
40 bis 90 Gew.-% Acrylsäure, 30 bis 5 Gew.-% Butylacrylat, 30 bis 5 Gew.-% Ethylhexylacrylat
Weichmacherzusatz: ethoxylierte Alkylamine, vorzugsweise C16 bis C18, weiter vorzugsweise mit 15 bis 25 Ethoxy-Einheiten.

Die Abmischung Weichmacher mit Polymer beträgt zwischen 55 bis 75 Gew.-% Weichmacher und 25 bis 45 Gew.-% Polymer.

Die Polymerisation erfolgt radikalisch in polaren Lösungsmitteln mit Ethanol als Regler. Es erfolgt eine Teilvernetzung mit Aluminiumchelat (0,3 bis 1,2 Gew.-%, bezogen auf die Gesamtmenge).

Bevorzugt wird die Selbstklebemasse mit einem Masseauftrag von 20 bis 60 g/m² aufgetragen, sehr bevorzugt wird ein Masseauftrag zwischen 25 und 50 g/m² gewählt.

Das spaltfähige System hat vorteilhaft einen deutlich geringeren Spaltwiderstand als ein Papierträger, der Zugkräfte aufnehmen muss. Das oder die spaltbaren Systeme basieren bevorzugt auf geleimtem hochverdichtetem Papier, auf einem Verbund aus Papier und Folie oder auf einem Verbund aus zwei Folien, wobei der Verbund aus definiert punkt- und/oder linienförmig verbundenen Papieren und/oder Folien bestehen kann. Hierfür kommen beispielsweise insbesondere folgende Papiere, Papierverbundsysteme oder Folien in Frage:
- leicht spaltbare Papiersysteme
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- definiert zusammengeleimte hochverdichtete Papiere (Papiere mit einer hohen Spaltfestigkeit).
   Die Leimung kann beispielsweise mit Stärke, stärkehaltigen Derivaten, Tapetenkleister auf Basis von Methylcellulose (tesa® Kleister , tesa AG, Hamburg; Methylan®, Henkel KgaA, Düsseldorf) oder auch auf Basis von Polyvinylalkoholderivaten erfolgen.
   Beschrieben werden solche Systeme beispielsweise in der EP 0 757 657 A1.
- spaltfähige Systeme, bei welchen die Spaltkräfte über die Größe der Verklebungspunkte bestimmt werden; solche Systeme werden beispielsweise in der DE 198 41 609 A1 beschrieben.
- koextrudierte Folien.

Das oder die spaltbaren Systeme haben vorteilhaft die gleiche Breite wie der Hauptträger. In einer weiteren günstigen Ausführungsform hingegen ist es von Vorteil, wenn der Hauptträger breiter als die spaltbaren Systeme ist. Außerdem ist es vorteilhaft, wenn der Hauptträger die spaltbaren Systeme im Bereich der Vorderkante (Längskante 14) bis zu 75 mm überragt.

Bei besonderen Ausführungsformen kann der Überstand kleiner sein, so z.B. 0,5 bis 15 mm, bevorzugt 1 bis 7 mm, sehr bevorzugt 1,5 bis 3,5 mm .

Werden mehrere spaltbare Systeme auf das Klebeband aufgebracht, so beträgt der Abstand der spaltbaren Systeme zueinander vorteilhaft 3 bis 50 mm. Bevorzugt werden Abstände von 25 bis 45 mm, ganz besonders Abstände von 30 bis 40 mm gewählt.
Bevorzugt wird ein reißfester Papier- oder Folienträger als Hauptträger eingesetzt. Als Trägermaterialien seien hier beispielsweise angeführt: schwach gekreppte Papiere, maschinenglatte Rohpapiere, einseitig gestrichene glatte Rohpapiere, beidseitig gestrichene, verdichtete, bedruckbare Dekorpapiere, einseitig doppelt gestrichene, holzfreie, hochglänzende Kraftpapiere, ohne sich durch diese Beispiele in der Wahl der Trägermaterialien unnötig einschränken zu wollen.

Bei mehreren spaltfähigen Systemen auf dem Klebeband können diese aus dem gleichen Material bestehen und somit gleiche Spaltkräfte aufweisen, es kann aber auch von Vorteil sein, die spaltfähigen Systeme aus unterschiedlichem Material vorzusehen, sodass diese unterschiedliche Spaltkräfte besitzen.

Es ist besonders vorteilhaft, wenn die Spaltfestigkeit des Spaltsystems 5 bis 70 cN/cm, insbesondere 12 bis 60 cN/cm beträgt. Zur Messung der Spaltfestigkeit wird verwiesen auf die DE 199 02 179 A1.

Bei dem Spliceverfahren wird ein Klebeband in einer geraden Linie mit dem spaltenden System unter die oberste Bahn auf eine Papierrolle verklebt, ein Teil des mittig geschlitzten Trennpapiers abgezogen und die oberste Papierlage auf der nun offen liegenden Klebmasse verklebt und das überstehende Papier abgerissen sodass ein Teil des Klebebandes frei bleibt, während die Unterseite des Klebebandes mit der darunter liegenden Bahn verklebt und damit die oberste Bahn sichert, wobei zunächst nur ein Teil der gegebenenfalls auf der Selbstklebemasse befindlichen Abdeckung abgezogen wurde, sodass der zum Spliceverfahren benötigte Teil der Selbstklebemasse noch mit der Abdeckung abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung entfernt wird, das noch zu verklebende Papierende auf die nun freiliegende Klebmasse geklebt wird, eventuell überstehendes Papier abgerissen wird, die Papierrolle wieder beschleunigt wird und der Spaltträger spaltet und beide Selbstklebemassen, die auf ihm beschichtet waren, mit seinen Resten nichtklebend abdeckt. Im Verlauf des weiteren Prozesses durchläuft die Klebestelle zusammen mit den derart verklebten Bahnen nach erfolgtem Splice einen Umwickler, Rollenschneider oder z.B. Querschneider.

Nach dem Beschleunigen der Papierbahn kommt es also zum Spalten des spaltbaren Systems des Klebebandes, so dass die oberste Papierlage des neuen Ballens freigegeben wird und keine klebrigen Rückstände mehr offen vorliegen.

Um den hohen Bahnspannungen in der Maschine und Drücken in der fertigen Rolle zu widerstehen, wird bevorzugt ein erfinderisches Klebeband eingesetzt, also ein solches, welches eine besonders scherfeste Klebemasse zum Verbinden der Papierbahnen und auf dem spaltenden System besitzt.

Vorteilhaft kann das Spliceverfahren derart durchgeführt werden, dass das Klebeband in einer geraden Linie rechtwinklig oder mit einem spitzen Winkel quer zur laufenden Bahn verklebt wird.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes
- Fig. 2: eine seitliche, schematische Ansicht eines Klebebandes gemäß Fig. 1, aufgeklebt auf eine Papierrolle und fertig für den manuellem, statischen Rollenwechsel
- Fig. 3: eine Ansicht gemäß Fig. 2, aber nach erfolgtem fliegenden Rollenwechsel.

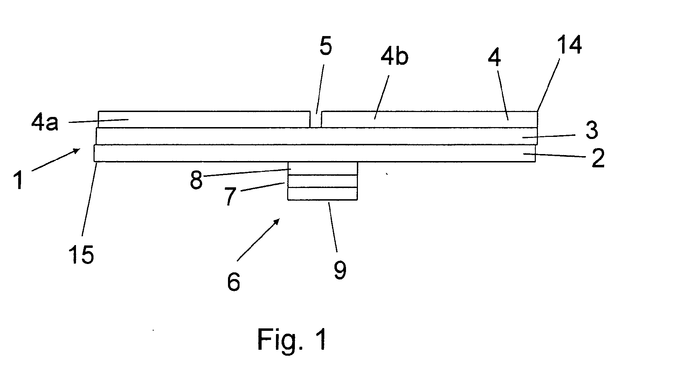

Im einzelnen zeigt Fig. 1 ein Klebeband 1 mit einem Hauptträger 2 aus schwach gekrepptem Papier, einseitig beschichtet mit einer wasserlöslichen Selbstklebemasse 3. Die Gesamtdicke des Hauptträgers 2 mit Selbstklebemasse 3 beträgt 0,080 mm, die Breite 150 mm, im Handel als tesakrepp 51445 von Beiersdorf AG, Deutschland.

Abgedeckt ist die Selbstklebemasse 3 mit einem silikonisierten Trennpapier 4, das in 75 mm Abstand vom linken Rand mit einem Schlitz 5 versehen ist, so dass zunächst der linke Teil 4a des Trennpapiers 4 abgenommen werden kann, dann der rechte Teil 4b. Der linke Teil 4a und der rechte Teil 4b sind gleich groß.

Im mittleren Bereich des Klebebandes 1 ist ein Streifen eines doppelseitig klebenden Klebebandes 6 unterklebt, bestehend aus einem Papierträger 7 aus Spaltpapier, beidseits beschichtet mit wasserlöslicher Selbstklebemasse 8 bzw. 9. Das Klebeband hat eine Breite von 9 mm.

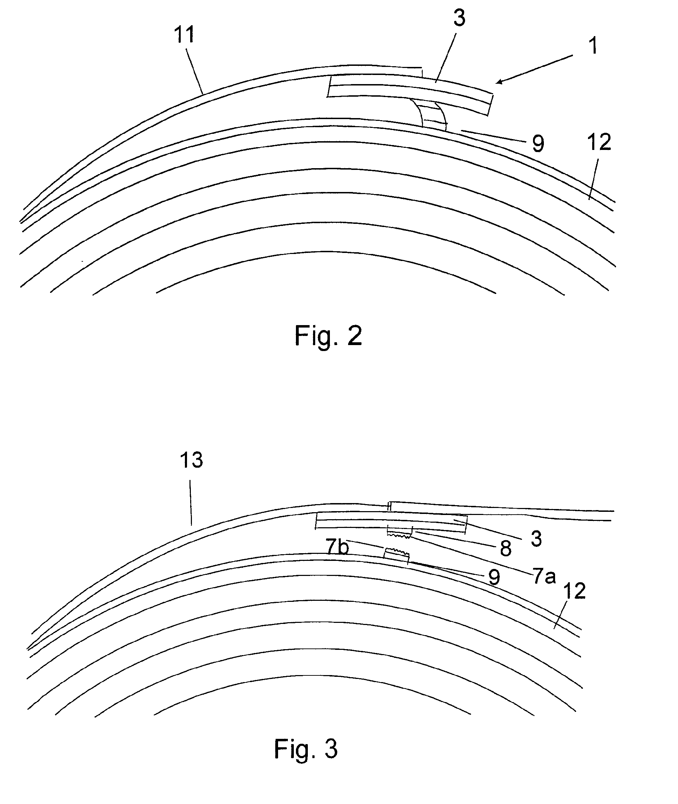

In Fig. 2 ist dargestellt, wie ein solches Klebeband 1 unter eine Papierbahn 11 einer Papierrolle geklebt ist, nachdem vom ersten Teil diesem der Teil 4a des Trennpapiers 4 abgezogen wurde. Vorher wurde das Klebeband mit den freiliegenden Selbstklebemasse 9 auf die unter der Papierbahn 11 liegende Papierbahn 12 der Papierrolle verklebt. Auch der rechte Teil 4b des Trennpapiers 4 wurde abgezogen, sodass die so ausgerüstete Papierrolle fertig für einen statisch, manuellen Rollenwechsel ist, wobei die Verklebung des Klebebandes 1 im rechten Winkel über die Rolle läuft.

Die Selbstklebemasse 3 liegt nun offen und stellt für den statisch, manuellen Wechsel die Kontaktfläche zu der noch zu verklebenden Papierbahn dar. Die Kontaktfläche hat eine Breite von 75 mm und erstreckt sich über die gesamte Breite der Papierrolle.

Die so ausgerüstete Papierrolle wird mit dem Papierende einer weiteren Rolle in Kontakt gebracht, das Papierende wird auf die freiliegende Klebmasse geklebt, der Überstand wird abgerissen. Nach dem Verbund wird die Papierrolle beschleunigt, augenblicklich nach dem Beschleunigen spalten die spaltfähigen Papierträger 7 derart, dass ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemasse 8 und 9 gewissermaßen neutralisiert, kleben nicht mehr und stören damit auch nicht im weiteren Prozess in den Papierverarbeitungsmaschinen.

Das erfinderische Klebeband vereinfacht in überraschender Weise den manuellen, statischen Rollenwechsel. Es kann leicht von einer Person über eine Bahnbreite von mehr als 5m aufgebracht werde. Komplizierte Hilfsmittel oder Mechaniken können entfallen.

Der Masseauftrag der Selbstklebemasse kann sehr gering gehalten werden, für den Fachmann unerwartet ist selbst bei Masseaufträgen beispielsweise im Bereich zwischen 20 und 60 g/m², besonders bei 35 g/m² (im Rahmen der üblichen Fehlertoleranzen), die Scherfestigkeit und Klebkraft der Selbstklebemasse gut und das Klebeband für den Einsatz für den statisch, manuellen Rollenwechsel geeignet. Durch die geringen Masseaufträge ist auch die Dicke des Klebebandes gering, so dass das Klebeband der Druckbeanspruchung innerhalb einer gewickelten Rolle auch über längere Zeiträume hervorragend widersteht.

## Patentansprüche

1. Klebeband für den Rollenwechsel von auf Rollen aufgewickeltem Flachbahnmaterial, ausgerüstet mit einem Hauptträger (2), einer Selbstklebemasse (3) auf der Vorderseite und zumindest einem klebenden, spaltbaren System (6) auf der Rückseite, **dadurch gekennzeichnet, dass** zur Aufnahme hoher Anlaufkräfte bei einem statischen, manuellen Rollenwechsel die Selbstklebemasse (3) eine Scherfestigkeit von mindestens 1000 Minuten auf Streichrohpapier und mindestens 2000 Minuten auf Tiefdruckpapier aufweist, gemessen jeweils bei 23 °C und 55 % relative Luftfeuchtigkeit und 1 kg Belastung.

2. Klebeband nach Anspruch 1, **dadurch gekennzeichnet, dass** der Masseauftrag der Selbstklebemassen (3, 8, 9) 15 bis 60 g/m², insbesondere 20 - 50 g/m² beträgt.

3. Klebeband nach zumindest einem der Ansprüche 1 oder 2, **dadurch gekennzeichnet, dass** die Selbstklebemasse (3, 8, 9) eine solche auf Acrylatbasis ist.

4. Klebeband nach zumindest einem der Ansprüche 1 bis 3, **dadurch gekennzeichnet, dass** das spaltbare System aus spaltfähigem Papier besteht.

5. Klebeband nach zumindest einem der Ansprüche 1 bis 3, **dadurch gekennzeichnet, dass** das spaltbare System (6) auf einem Verbund aus geleimtem hochverdichtetem Papier, auf einem Verbund aus Papier und Folie oder auf einem Verbund aus zwei Folien basiert.

6. Klebeband nach zumindest einem der Ansprüche 3 bis 5, **dadurch gekennzeichnet, dass** das spaltbare System (6) die gleiche Breite wie der Hauptträger (2) hat.

7. Klebeband nach zumindest einem der Ansprüche 1 bis 6, **dadurch gekennzeichnet, dass** der Hauptträger (2) ein reißfester Papier- oder Folienträger ist.

8. Klebeband nach zumindest einem der Ansprüche 1 bis 7, **dadurch gekennzeichnet, dass** die Selbstklebemasse (3) mit einer Abdeckung (4) versehen ist, die gegebenenfalls mit einer Perforation oder einem Schlitz (5) in Längsrichtung versehen ist.

9. Klebeband nach zumindest einem der Ansprüche 1 bis 8, **dadurch gekennzeichnet, dass** die Spaltfestigkeit des Spaltsystems (6) 5 bis 70 cN/cm, insbesondere 12 bis 60 cN/cm beträgt.

10. Klebeband nach einem der Ansprüche 1 bis 9, **gekennzeichnet durch** eine symmetrische Ausbildung bezüglich der Mittenebene in Längsrichtung.

11. Verwendung eines mit einem Hauptträger (2), einer Selbstklebemasse (3) auf der Vorderseite und zumindest einem spaltbaren System (6) auf der Rückseite ausgebildeten Klebeband für die Durchführung eines statischen, manuellen Rollenwechsels von auf Rollen aufgewickeltem Flachbahnmaterial, nachdem eine Selbstklebemasse (3) aufgebracht ist, die eine Scherfestigkeit von mindestens 1000 Minuten auf Streichrohpapier und mindestens 2000 Minuten auf Tiefdruckpapier aufweist, gemessen jeweils bei 23 °C und 55 % relative Luftfeuchtigkeit und bei 1 kg Belastung.

12. Verwendung eines Klebebands nach einem der Ansprüche 1 bis 10 zur Durchführung eines statischen, manuellen Rollenwechsels von auf Rollen aufgewickeltem Flachbahnmaterial.
